# EUROPÄISCHE PATENTANMELDUNG

(11) **EP 3 865 949 A1**
(43) Veröffentlichungstag der Anmeldung: **18.08.2021**
(21) Anmeldenummer: 21155711.1
(22) Anmeldetag: 08.02.2021
(51) Int. Cl.: G03H 1/02, G02B 26/12, G02B 27/00, G02B 27/09, G03H 1/20, G03H 1/00

(54) **HOLOGRAMMBELICHTUNGSMASCHINE UND STRAHLFORMUNGSEINRICHTUNG FÜR EINE SOLCHE**

(30) Priorität: 12.02.2020 DE 102020103616
(71) Anmelder: Bundesdruckerei GmbH, 10969 Berlin (DE)
(72) Erfinder: Langgaßner, Michael, 81245 München (DE); Richter, Werner, 80999 München (DE)
(74) Vertreter: Hentrich Patentanwälte PartG mbB

(57) **Zusammenfassung**

Die Erfindung betrifft eine Strahlformungseinrichtung (322) für eine Hologrammbelichtungsmaschine (300), mit mindestens einer Eintrittsöffnung (350) für von einer Lichtquelle (304) emittiertes Licht (400), mit einem Rad (352), das eine als ein Vieleck gebildete Grundfläche, eine der Grundfläche entsprechende Deckfläche sowie eine die Grundfläche mit der Deckfläche verbindende und aus verspiegelten Rechtecken gebildete Mantelfläche (354) aufweist, mit einer elektrischen Antriebseinheit (356), die ausgebildet ist, das Rad (352) um eine senkrecht bezüglich der Einfallsrichtung des Lichts (400) orientierte Drehachse rotatorisch anzutreiben, sowie mit einer Austrittsöffnung (358) für das von der Mantelfläche (354) reflektierte Licht (400). Die Erfindung betrifft außerdem eine Hologrammbelichtungsmaschine (300) mit einer solchen Strahlformungs-einrichtung (322).

## Beschreibung

Die Erfindung betrifft eine Strahlformungseinrichtung für eine Hologrammbelichtungsmaschine sowie eine Hologrammbelichtungsmaschine mit einer solchen.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert, wie beispielsweise den Druckschriften DE 10 2012 215 540 A1, DE 10 2007 042 385 A1 und DE 10 2007 042 386 A1 zu entnehmen ist. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden beim Kontaktkopierverfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt. Ein Verfahren zur Herstellung eines Masters und ein Kontaktkopierverfahren sind der EP 0 896 260 A2 zu entnehmen.

Aus dem vorangehend zitierten Stand der Technik ist es bekannt, den Strahl der Lichtquelle aufzuweiten unter Verwendung einer als eine Powell- oder Zylinderlinse gebildeten Strahlformungseinrichtung. Diese Strahlformungseinrichtung weitet das von der Lichtquelle emittierte Licht in der Regel entlang einer Raumrichtung auf, derart, dass eine Scanlinie mit vorzugsweise homogener Intensitätsverteilung vorliegt, um das Hologramm zu belichten. Durch den Schliff der Powell-Linsen können unerwünschte Streifeneffekte in Hologramm hervorgerufen werden, die sich durch die bei der Fertigung der Linsen ergebenden Toleranzen ergeben. Bei der aufgeweiteten Linie treten also entlang der Linie Intensitätsschwankungen auf, die zu Ausschuss bei der Belichtung führen können. Die Powell-Linse und deren Strahlformung ist sehr vom eingehenden Laserstrahlprofil abhängig.

Es ist daher die Aufgabe der vorliegenden Erfindung, eine verbesserte Strahlformungseinrichtung und eine verbesserte Hologrammbelichtungsmaschine bereitzustellen.

Diese Aufgabe wird gelöst durch eine Strahlformungseinrichtung mit den Merkmalen des Anspruchs 1 und durch eine Hologrammbelichtungsmaschine mit den Merkmalen des Anspruchs 10. Vorteilhafte Ausgestaltungen mit zweckmäßigen Weiterbildungen der Erfindung sind in den abhängigen Ansprüchen angegeben.

Die Strahlformungseinrichtung für die Hologrammbelichtungsmaschine umfasst dabei mindestens eine Eintrittsöffnung für von einer Lichtquelle emittiertes Licht. Ferner ist ein Rad vorhanden, das eine als ein Vieleck gebildete Grundfläche, eine der Grundfläche entsprechende Deckfläche sowie eine die Grundfläche mit der Deckfläche verbindende und aus verspiegelten Rechtecken gebildete Mantelfläche aufweist. Die Strahlformungseinrichtung umfasst außerdem eine elektrische Antriebseinheit, die ausgebildet ist, das Rad um eine senkrecht bezüglich der Einfallsrichtung des Lichts orientierte Drehachse rotatorisch anzutreiben. Ferner ist eine Austrittsöffnung vorhanden für das von der Mantelfläche reflektierte Licht. Eine mit einem Polygonrad geformte Strahlformungseinrichtung ist dabei unabhängig vom Laserstrahlprofil und gewährleistet bei hinreichender Umdrehung des Rades eine gleichmäßige Intensitätsverteilung des von der Strahlformungseinrichtung aufgeweiteten Lichts.

Um zu gewährleisten, dass das Laserstrahlprofil homogen und gleichmäßig auf die Mantelfläche des Rads auftrifft, hat es sich als sinnvoll erwiesen, wenn in die Eintrittsöffnung eine Korrekturlinse eingebracht ist.

Zur Maximierung der Intensität des aufgeweiteten Lichtstrahls hat es sich zudem als vorteilhaft erwiesen, wenn die Korrekturlinse als eine Sammellinse (z. B. in Form einer Zylinderlinse) zur Fokussierung des einfallenden Lichtstrahls auf die Mantelfläche des Rads gebildet ist.

Eine geeignete Aufweitung, beispielswese in lediglich einer Raumrichtung, lässt sich dadurch hervorrufen, dass auch in der Austrittsöffnung eine Zylinderlinse angeordnet ist, die vorzugsweise plankonvex vorliegt.

Da die meisten Hologrammbelichtungsmaschinen mit einem Linienscan belichten, hat es sich als sinnvoll erwiesen, wenn die Zylinderlinse ausgebildet ist, den Lichtstrahl auf eine Linie zu fokussieren; also eine gerade/ parallele Linie zu formen.

In diesem Zusammenhang ist es zu dem von Vorteil, wenn die Zylinderlinse derart ausgestaltet ist, dass das aus der Austrittsöffnung austretende Licht eine über seine Abmessung hinweg homogene Intensität aufweist. Unter homogener Intensität ist eine möglichst geringe, insbesondere nicht messbare Intensitätsschwankung zu verstehen.

Um die Vorrichtung entsprechend kompakt gestalten zu können, hat es sich als vorteilhaft erwiesen, wenn die die Mantelfläche bildenden Rechtecke eine senkrecht bezüglich der Drehachse ausgerichtete Breite aufweisen, die geringer ist als die senkrecht bezüglich der Drehachse ausgerichtete Abmessung der Zylinderlinse.

Eine homogene Intensität des aufgeweiteten Lichtstrahls lässt sich dadurch hervorrufen, dass die Antriebseinheit ausgebildet ist, das Rad mit mindestens 1000 Umdrehungen/pro Minute anzutreiben, wobei ein Antreiben von bis zu 12000 Umdrehungen/pro Minute bevorzugt ist. In diesem Zusammenhang und um Intensitätsschwankungen zu vermeiden, ist vorzugsweise die Antriebseinheit zusätzlich ausgebildet, die Umdrehungsanzahl konstant zu halten. Aus diesem Grunde ist das Vieleck des Rades vorzugsweise auch als ein regelmäßiges Vieleck, mithin als ein Polygon gebildet.

Da die Breite der Scanlinie abhängig ist von den Abmessungen der Austrittsöffnung sowie der darin gegebenenfalls angeordneten Zylinderlinse, genügt es, wenn eine Reflektion des einfallenden Lichtstrahls nur bereichsweise erfolgt. Um die Strahlformungseinrichtung kompakt zu halten ist es daher von Vorteil, dass die Einfallsrichtung des Lichts und die mindestens eine Ausfallsrichtung des von der Mantelfläche reflektierten Lichts senkrecht und seitlich versetzt zur Drehachse des Rads ausgerichtet sind.

Eine mit der erfindungsgemäßen Strahlformungseinrichtung ausgestattete Hologrammbelichtungsmaschine zeichnet sich durch eine verbesserte Qualität des in einen Hologrammfilm eingebrachten Hologramms aus. Sie ist nicht mehr abhängig von dem Fertigungstoleranzen unterliegenden Schliff der Powell-Linse. Aus diesem Grunde gelten die für die erfindungsgemäße Strahlformungseinrichtung genannten Vorteile und vorteilhaften Ausgestaltungen in gleichem Maße für die erfindungsgemäße Hologrammbelichtungsmaschine.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine schematische Darstellung einer Hologrammbelichtungsmaschine zur Belichtung eines Volumenreflexionshologramms in einen Hologrammfilm,
- Figur 2: eine perspektivische Ansicht einer Strahlformungseinrichtung,
- Figur 3: eine Schnittansicht durch die Strahlformungseinrichtung nach Figur 2, und
- Figur 4: die Intensitätsverteilung der von der Strahlformungseinrichtung erzeugten Lichtlinie.

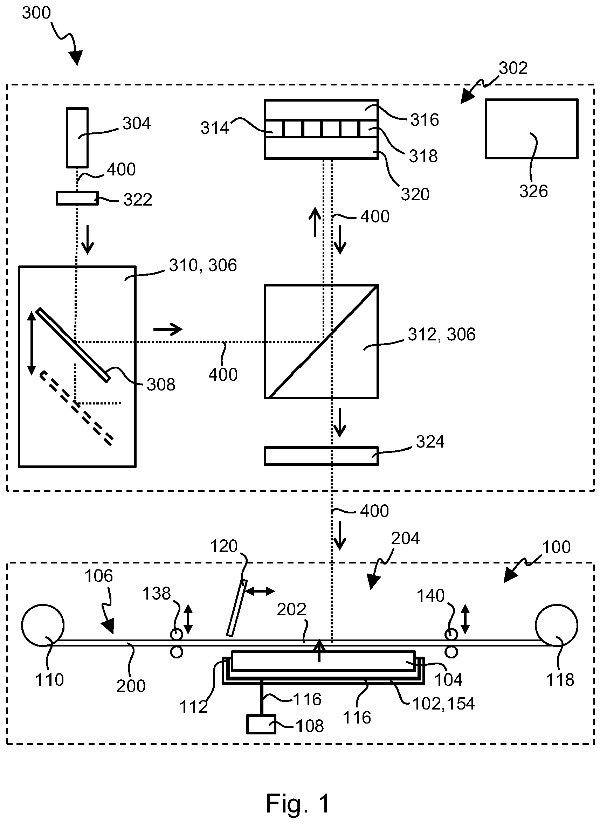

In Figur 1 ist schematisch eine Hologrammbelichtungsmaschine 300 zum Belichten von Hologrammen in einem Hologrammfilm 200 gezeigt. Eine solche Hologrammbelichtungsmaschine 300 wird auch als Holobelichter bezeichnet.

Die Hologrammbelichtungsmaschine 300 umfasst eine in der Zeichnung oben dargestellte Belichtungseinrichtung 302 und einen in der Zeichnung unten dargestellten Belichtungstisch 100.

Die Belichtung von Hologrammen erfolgt mittels kohärentem Licht. Hierfür weist die Belichtungeinrichtung 302 eine Lichtquelle 304 auf, welche vorliegend als ein cw-Laser ausgebildet ist. Vorliegend steht "cw" für "continuous wave" und bedeutet "zeitlich konstant abgestrahlte Welle". Es ist die Möglichkeit gegeben, dass es sich bei der Lichtquelle 304 um einen gepulsten Laser handelt. Es können auch mehrere Lichtquellen 304 vorhanden sein, die jeweils eine unterschiedliche Wellenlänge des Lichts emittieren. Das Licht 400 der als Laser ausgebildeten Lichtquelle 304 weist einen ersten Polarisationszustand auf. Zum Führen des Lichts 400 wird eine Strahlführungsoptik 306 verwendet. Das Licht der Lichtquelle 304 wird bei der dargestellten Belichtungseinrichtung 302 zunächst unter Zuhilfenahme einer Strahlformungseinrichtung 322 zur insbesondere in einer Raumrichtung orientierten Strahlaufweitung, auf eine Ablenk- und Scanvorrichtung 310 der Strahlführungsoptik 306 geführt. Diese Ablenk- und Scanvorrichtung 310 umfasst einen rotatorisch antreibbaren Galvanometerscanner und einen mit dem Galvanometerscanner gekoppelten Spiegel 308, an dem das einfallende Licht 400 umgelenkt wird. In einer ersten Stellung ist der Spiegel 308 mittels einer durchgezogenen Linie dargestellt, wobei er in einer zweiten Stellung strichliert gezeigt ist. Durch das Verschieben des Spiegels 308 kann eine einem "Scan", insbesondere einem Linienscan entsprechende Belichtung des Hologramms erfolgen. In anderen Worten wird der Hologrammfilm 200 zur Belichtung des Hologramms "abgetastet". Anders geartete Ablenk- und Scanvorrichtungen 310 für das Licht 400 sind ebenfalls einsetzbar.

Das abgelenkte Licht 400 wird auf einen polarisationsabhängigen Strahlteilerwürfel 312 der Strahlführungsoptik 306 geführt. Dieser ist aus einem ersten Prisma und einem zweiten Prisma gebildet, an deren Grenzfläche eine polarisationsabhängige Strahlteilung erfolgt. Anstelle von Prismen kann auch eine Strahlteilerplatte Einsatz finden. Licht 400 des ersten Polarisationszustands wird an dieser Grenzfläche abgelenkt. Licht eines weiteren, zu dem ersten Polarisationszustand orthogonalen Polarisationszustands kann hingegen durch die Grenzfläche hindurchtreten.

Das an der Grenzfläche des polarisationsabhängigen Strahlteilerwürfels 312 abgelenkte Licht 400 wird auf einen räumlichen Lichtmodulator 314 gelenkt, der als sogenannter Liquid-Crystal-on-Silicon-Lichtmodulator (LCoS) ausgebildet ist. Der Lichtmodulator 314 umfasst eine Siliziumschicht 316, an der auftreffendes Licht 400 reflektiert wird. Auf dieser Siliziumschicht 316 sind vorliegend elektronische Schaltelemente ausgebildet, die zum Schalten von Flüssigkristallzellen 318 verwendet werden, die vor der zur Reflexion genutzten Oberfläche der Siliziumschicht 316 angeordnet sind. Die einzelnen Flüssigkristallzellen 318 können individuell in unterschiedliche Schaltzustände versetzt werden. Typischerweise liegt ein Array an Flüssigkristallzellen 318 vor, so dass aus der Papierebene heraus oder in diese hinein versetzt weitere Reihen an Flüssigkristallzellen 318 vorliegen. Abhängig von dem jeweiligen Schaltzustand der Flüssigkristallzellen 318 wird ein Polarisationszustand des durchtretenden Lichts 400 geändert oder nicht geändert, wodurch das Licht 400 räumlich moduliert wird. Vereinfachend wird hier angenommen, dass in einem ersten Schaltzustand das in einem ersten Polarisationszustand auf den Lichtmodulator 314 auftreffende Licht 400 beim Durchtritt durch eine Flüssigkristallzelle 318, welche aufgrund der Reflexion an der Oberfläche der Siliziumschicht 316 zweimal durchlaufen wird, insgesamt hinsichtlich der Polarisation so verändert wird, dass das Licht 400 anschließend in dem zu dem ersten Polarisationszustand orthogonalen weiteren Polarisationszustand polarisiert ist. Dieses hinsichtlich der Polarisation modulierte Licht 400 tritt durch eine transparente Schutzscheibe 320 des räumlichen Lichtmodulators 314, wobei insbesondere eine Austrittsfläche der Schutzscheibe 320 parallel zu der Reflexionsoberfläche der Siliziumschicht 316 orientiert ist. Die Oberflächennormale des Lichtmodulators 314 ist somit orthogonal sowohl zu der Austrittsfläche der Schutzscheibe 320 als auch zu der reflektierenden Oberfläche der Siliziumschicht 316.

Das modulierte Licht trifft nach dem Austreten aus dem Lichtmodulator 314 erneut auf dem polarisationsabhängigen Strahlteiler 312 auf, wobei das vom LCoS zurückreflektierte modulierte Licht 400 abhängig von seinem Polarisationszustand die Grenzfläche des Strahlteilers 312 passieren kann oder nicht. Ist das modulierte Licht 400, wie im exemplarisch dargestellten Fall, aufgrund des ersten Schaltzustands der Flüssigkristallzelle in den zu dem ersten Polarisationszustand orthogonalen weiteren Polarisationszustand überführt worden, so kann dieses die Grenzfläche des polarisationsabhängigen Strahlteilerwürfels 312 passieren, womit es, ggfs. unter Zuhilfenahme eines Polarisationsfilters 324, weiter in Richtung des Belichtungstisches 100 geleitet wird. Anteile des Lichts 400, die sich nach wie vor in dem ersten Polarisationszustand befinden und an dem polarisationsabhängigen Strahlteilerwürfel 312 ankommen, werden an dessen Grenzfläche abgelenkt und gelangen daher nicht weiter in Richtung des sich unter der Belichtungseinrichtung 302 befindlichen Belichtungstisches 100. Durch den polarisationsabhängigen Strahlteilerwürfel 312 wird somit das Licht 400 abhängig von dem aufmodulierten Polarisationszustand räumlich hinsichtlich der Intensität moduliert.

Bei der Beschreibung der Belichtungseinrichtung 302 wurde bis hierher davon ausgegangen, dass der räumliche Lichtmodulator 314 den Polarisationszustand des Lichts um 90 Grad dreht oder unverändert lässt. Es sind jedoch auch Änderungen möglich, die eine Drehung der Polarisationsrichtung zwischen 0 Grad und 90 Grad bewirken. Alle diese Drehungen führen dazu, dass das Licht eine veränderte Amplitude und damit veränderte Intensität des weiteren Polarisationszustands aufweist. Je nach Drehwinkel variieren diese und nehmen mit dem Betrag der Drehung zwischen 0 Grad und 90 Grad zu. Hierdurch ist es möglich "Graustufen" zu belichten.

Der Belichtungstisch 100 weist eine Halteeinrichtung 102 auf, in welcher ein Master 104 aufgenommen ist. Der Master 104 umfasst einen Träger, welcher in der Regel aus Glas oder einem anderen Werkstoff gebildet ist. Auch andere Trägermaterialien sind möglich, beispielsweise Metalle. Auf den Träger ist vorzugsweise mindestens eine optisch aktive Schicht, beispielsweise eine Beugungsschicht, aufgebracht, welche eine zu kopierende Beugungsstruktur umfasst. Vorliegend umfasst die Beugungsschicht des Masters 104 ein Volumenreflexionshologramm, welches kopiert werden soll.

Es ist zu erkennen, dass die Belichtungsmaschine 300, insbesondere der Belichtungstisch 100 eine Filmtransporteinrichtung 106 umfasst, die ausgebildet ist, den Hologrammfilm 200 relativ bezüglich der Halteeinrichtung 102 und damit relativ zum Master 104 zu transportieren. Die Filmtransporteinrichtung 106 ist für ein Aufnehmen des holografischen Films und Halten und/oder Führen des Films während der Belichtung des Hologramms vorgesehen. Bei der dargestellten Belichtungsmaschine 300 umfasst die Filmtransporteinrichtung 106 eine Filmrolle 110, auf der der Hologrammfilm 200 bereitgestellt wird. Dieser wird nach dem Belichten auf einer weiteren Filmrolle 118 aufgewickelt. Gegebenenfalls durchläuft der belichtete Hologrammfilm 200 eine Strecke zur Entwicklung der Hologramms, durch welche thermisch auf den Hologrammfilm 200 eingewirkt wird, um das Hologramm im Film zu fixieren, bevor der belichtete Hologrammfilm 200 auf der weiteren Filmrolle 118 wieder aufgewickelt wird. Der Hologrammfilm 200 wird jedenfalls in typischer Weise mittels Filmführungsrollen geführt. Es ist zu erkennen, dass sich der Hologrammfilm 200 über den Bereich des Masters 104 hinweg erstreckt, womit die Filmtransporteinrichtung 106 in anderen Worten also ausgebildet ist, einen zu belichtenden Filmabschnitt 202 relativ bezüglich des Masters 104 zu positionieren. In diesen Filmabschnitt 202 wird das Volumenreflexionshologramm belichtet, mithin einkopiert. Um eine betriebssichere Belichtung des Hologramms zu erzielen, liegt der Hologrammfilm 200 während des Belichtungsvorgangs an dem Master 104 an. Durch diese Anlage lassen sich Eigenbewegungen des holografischen Films unterdrücken, was die erzielbare Beugungseffizienz des hergestellten Hologramms steigert.

Bei der Belichtung tritt das modulierte Licht 400, welches den weiteren Polarisationszustand aufweist, durch den zu belichtenden Filmabschnitt 202 des Hologrammfilms 200 hindurch und wird an der optisch aktiven Struktur der mindestens einen optisch aktiven Schicht des Masters 104 zurückgelenkt, z.B. bei einer als Beugungsschicht ausgebildeten optisch aktiven Schicht gebeugt. Das zurückgestrahlte Licht (nicht dargestellt) interferiert dann in dem Hologrammfilm 200 mit dem von dem Lichtmodulator 314 kommenden modulierten Licht 400. Hierdurch wird die optisch aktive Struktur, z.B. die beugende Struktur, des Masters 104 in den Hologrammfilm 200 einbelichtet. Hierbei wird die optisch aktive Struktur pixelweise abhängig von der räumlichen Modulation entweder belichtet und kopiert oder andererseits nicht belichtet und somit auch nicht kopiert. Es entsteht somit eine Kopie der optisch aktiven Struktur, beispielsweise eine Kopie eines Volumenreflexionshologramms einer Mattscheibe.

Der Halteeinrichtung 102 ist vorliegend eine Drucklufteinrichtung 108 zugeordnet, die ausgebildet ist, für die Belichtung des Filmabschnitts 202 diesen mittels eines Unterdrucks an dem in der Halteeinrichtung 102 aufgenommenen Master 104 zumindest zeitweise zu fixieren. Hierzu ist vorliegend ein um den Master 104 umfangsseitig angeordneter Schlitz vorhanden, der somit eine Gasdurchtrittsanordnung 112 bildet. Die Gasdurchtrittsanordnung 112 rahmt also den Master 104 umfangsseitig und gewährleistet damit ein blasenfreies Anliegen des zu belichtenden Filmabschnitts 202 am Master 104. Vorliegend kann die Drucklufteinrichtung 108 aber zusätzlich dazu genutzt werden, um zeitweise einen Überdruck derart bereitzustellen, dass der Transport des Hologrammfilms 200 relativ bezüglich des Masters 104 von einem Luftpolster gestützt erfolgt, was Beschädigungen des Hologrammfilms 200 zusätzlich vorbeugt.

Um Gaseinschlüsse zwischen dem Hologrammfilm 200 und dem Master 104 zusätzlich herausdrücken zu können, ist vorliegend außerdem eine Aufstreifeinrichtung 120 vorhanden um den zu belichtenden Filmabschnitt 202 auf den Master 104 aufzustreifen. Diese Aufstreifeinrichtung 120 ist vorliegend durch einen zwischen zwei Anschlägen verschiebbaren Schlitten gebildet, an dem eine auf einer Drehachse drehbar gelagerte und beim Aufstreifen mit dem Filmabschnitt 202 wechselwirkende Anpressrolle gelagert ist.

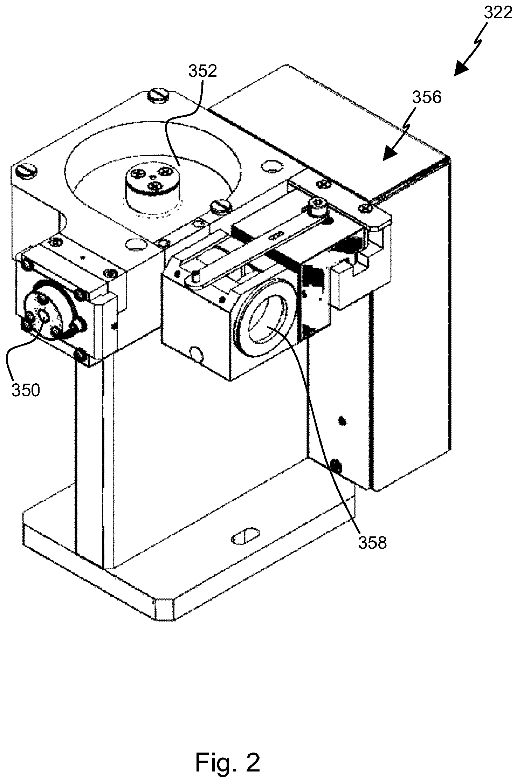

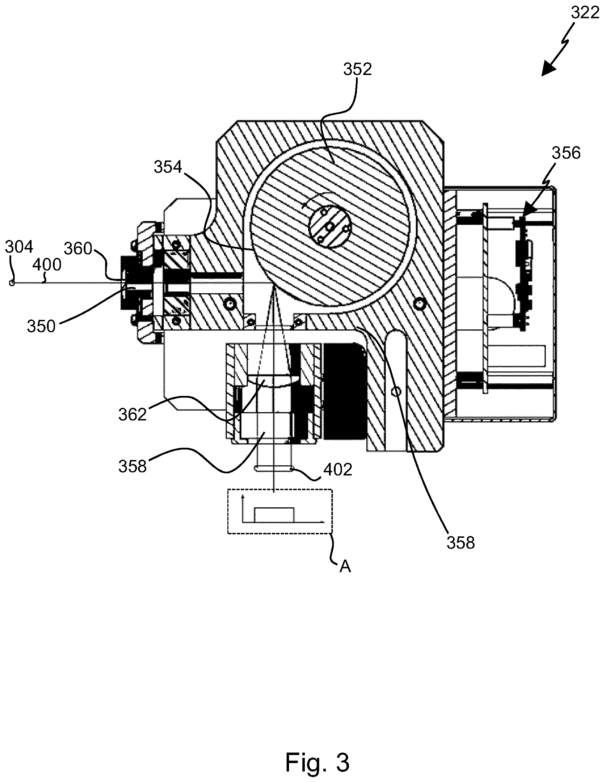

Die vorliegende Erfindung beschäftigt sich mit der Strahlformungseinrichtung 322 zur Aufweitung des von der Lichtquelle 304 emittierten Lichts. Eine Strahlformungseinrichtung 322 ist in Figur 2 näher gezeigt, die anhand des Schnittes nach Figur 3 näher erläutert wird.

Die Strahlformungseinrichtung 322 für die vorangehend erläuterte Hologrammbelichtungsmaschine 300 umfasst eine Eintrittsöffnung 350 für das von der Lichtquelle 304 emittierte Licht 400. Durch diese Eintrittsöffnung 350 wird die Einfallsrichtung des Lichts 400 festgelegt, wozu in die Eintrittsöffnung 350 eine Korrekturlinse 360 eingebracht ist, welche vorliegend als eine Zylinderlinse zur Fokussierung des einfallenden Lichtstrahls auf eine Mantelfläche 354 eines Rads 352 gebildet ist.

Dieses Rad 352 weist eine als ein regelmäßiges Vieleck (bspw. Polygon) gebildete Grundfläche, eine der Grundfläche entsprechende Deckfläche sowie die Grundfläche mit der Deckfläche verbindende und aus verspiegelten Rechtecken gebildete Mantelfläche 354 auf. Das Rad 352 ist drehbar um eine Drehachse gelagert, wobei eine elektrische Antriebseinheit 356 vorhanden und ausgebildet ist, das Rad 352 um die senkrecht bezüglich der Einfallsrichtung des Lichts 400 orientierte Drehachse rotatorisch anzutreiben. Wenn das Licht 400 auf die verspiegelten Rechtecke der Mantelfläche 354 des Rads 352 auftrifft wird es reflektiert, wobei durch die Drehung des Rads 352 eine Aufweitung des Lichtstrahls erfolgt.

Das von der Mantelfläche 354 reflektierte Licht 400 tritt aus der Strahlformungseinrichtung 322 aus einer Austrittsöffnung 358 aus, in welche eine Zylinderlinse 362 eingebracht ist, die vorliegend als eine plankonvexe Linse gestaltet ist. Durch die Zylinderlinse 362 wird eine Linie 402 hervorgerufen die bei einer hinreichenden Umdrehungszahl des Rads 352 quasistatisch vorliegt. Um eine solche Linie hervorzurufen ist die Antriebseinheit 356 vorliegend ausgebildet, das Rad 352 mit mindestens 1000 Umdrehungen, insbesondere mit 3000 bis 5000 Umdrehungen/min anzutreiben. Da es häufig genügt, nur geringe Ausdehnungen der Linie 402 hervorzurufen, weisen die die Mantelfläche 354 bildenden Rechtecke eine senkrecht bezüglich der Drehachse ausgerichtete Breite auf, die geringer ist als die senkrecht bezüglich der Drehachse ausgerichtete Abmessung der Zylinderlinse 362. Zudem ist zu erkennen, dass die Einfallrichtung des Lichts 400 und die mindestens eine Ausfallsrichtung des von der Mantelfläche 354 reflektierten Lichts 400 senkrecht bezüglich der Drehachse des Rads 352 und seitlich zu dieser versetzt ausgerichtet sind.

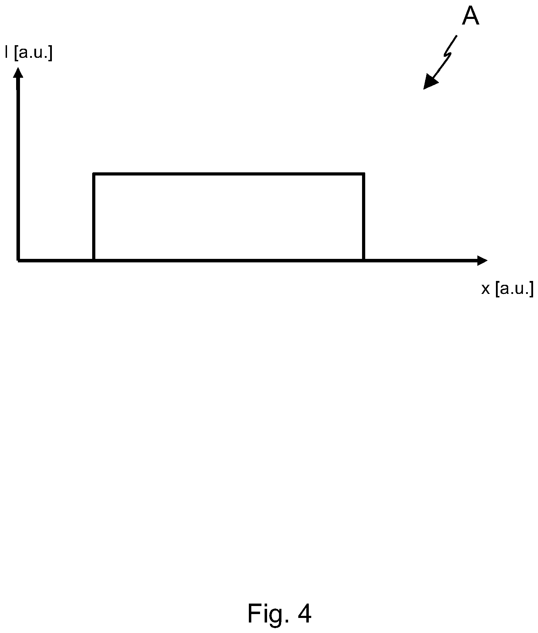

Ausweislich Figur 4 ist durch die schnelle Drehbewegung des Rads 352 ein Liniensegment durch die Strahlformungseinrichtung 322 hervorgerufen, das eine quasihomogene Intensitätsverteilung über seine Abmessungen hinweg aufweist. Die so gebildete Strahlformungseinrichtung 322 weist dabei also nicht mehr die Nachteile der Verwendung einer Powell-Linse für die Strahlaufweitung auf und eignet sich daher in besonderem Maße für den Einsatz in der Hologrammbelichtungsmaschine 300. Diese Hologrammbelichtungsmaschine 300 zeichnet sich durch eine zuverlässige Belichtung von Hologrammen aus, so dass der Ausschussgrad, also die Anzahl an fehlerhafter Hologramme drastisch reduziert oder auf ein Minimum herabgesetzt ist.

### BEZUGSZEICHENLISTE

- 100: Belichtungstisch
- 102: Halteeinrichtung
- 104: Master
- 106: Filmtransporteinrichtung
- 108: Drucklufteinrichtung (Saugeinrichtung und/oder Blaseinrichtung)
- 110: Filmrolle (unbelichteter Holofilm)
- 112: Gasdurchtrittsanordnung
- 116: Kanal (Druckluft/Saugluft)
- 118: weitere Filmrolle (belichteter Holofilm)
- 120: Aufstreifeinrichtung
- 138: erste Filmhubeinrichtung
- 140: zweite Filmhubeinrichtung
- 200: Hologrammfilm
- 202: Filmabschnitt (zu belichtender Filmabschnitt)
- 300: Hologrammbelichtungsmaschine
- 302: Belichtungseinrichtung
- 304: Lichtquelle (z.B. Laser)
- 306: Strahlführungsoptik
- 308: Spiegel
- 310: Ablenk- und Scaneinrichtung
- 312: Strahlteiler
- 314: Lichtmodulator
- 316: Siliziumschicht
- 318: Flüssigkristallzelle
- 320: Schutzscheibe
- 322: Strahlformungseinrichtung
- 324: Polarisationsfilter
- 326: Steuerungseinrichtung
- 350: Eintrittsöffnung
- 352: Rad
- 354: Mantelfläche
- 356: Antriebseinheit
- 358: Austrittsöffnung
- 360: Korrekturlinse
- 362: Zylinderlinse
- 400: Licht
- 402: Linie

## Patentansprüche

1. Strahlformungseinrichtung (322) für eine Hologrammbelichtungsmaschine (300), mit mindestens einer Eintrittsöffnung (350) für von einer Lichtquelle (304) emittiertes Licht (400), mit einem Rad (352), das eine als ein Vieleck gebildete Grundfläche, eine der Grundfläche entsprechende Deckfläche sowie eine die Grundfläche mit der Deckfläche verbindende und aus verspiegelten Rechtecken gebildete Mantelfläche (354) aufweist, mit einer elektrischen Antriebseinheit (356), die ausgebildet ist, das Rad (352) um eine senkrecht bezüglich der Einfallsrichtung des Lichts (400) orientierte Drehachse rotatorisch anzutreiben, sowie mit einer Austrittsöffnung (358) für das von der Mantelfläche (354) reflektierte Licht (400).

2. Strahlformungseinrichtung (322) nach Anspruch 1, **dadurch gekennzeichnet, dass** in die Eintrittsöffnung (358) eine Korrekturlinse (360) eingebracht ist.

3. Strahlformungseinrichtung (322) nach Anspruch 2, **dadurch gekennzeichnet, dass** die Korrekturlinse (360) als eine Sammellinse zur Fokussierung des einfallenden Lichtstrahls auf die Mantelfläche (354) des Rads (352) gebildet ist.

4. Strahlformungseinrichtung (322) nach Anspruch 1 oder 2, **dadurch gekennzeichnet, dass** in der Austrittsöffnung (358) eine Zylinderlinse (362) angeordnet ist.

5. Strahlformungseinrichtung (322) nach Anspruch 4, **dadurch gekennzeichnet, dass** die Zylinderlinse (362) ausgebildet ist, den Lichtstrahl auf eine Linie (402) zu fokussieren.

6. Strahlformungseinrichtung (322) nach Anspruch 4 oder 5, **dadurch gekennzeichnet, dass** das aus der Austrittsöffnung (358) austretende Licht (400) eine über seine Abmessung hinweg homogene Intensität aufweist.

7. Strahlformungseinrichtung (322) nach einem der Ansprüche 4 bis 6, **dadurch gekennzeichnet, dass** die die Mantelfläche (354) bildenden Rechtecke eine senkrecht bezüglich der Drehachse ausgerichtete Breite aufweisen, die geringer ist als die senkrecht bezüglich der Drehachse ausgerichtete Abmessung der Zylinderlinse (362).

8. Strahlformungseinrichtung (322) nach einem der Ansprüche 1 bis 4, **dadurch gekennzeichnet, dass** die Antriebseinheit (356) ausgebildet ist, das Rad (352) mit mindestens 1000 Umdrehungen pro Minute anzutreiben.

9. Strahlformungseinrichtung (322) nach einem der Ansprüche 1 bis 8, **dadurch gekennzeichnet, dass** die Einfallsrichtung des Lichts (400) und die mindestens eine Ausfallsrichtung des von der Mantelfläche (354) reflektierten Lichts (400) senkrecht und seitlich versetzt zur Drehachse des Rads (352) ausgerichtet sind.

10. Hologrammbelichtungsmaschine (300) zum Einbringen eines Volumenreflexionshologramms in einen Hologrammfilm (200) mit einer Strahlformungseinrichtung (322) nach einem der Ansprüche 1 bis 9.
